# EUROPEAN PATENT SPECIFICATION

(11) **EP 0 909 508 B1**
(45) Date of publication and mention of the grant of the patent: **21.01.2004**
(21) Application number: 97934874.5
(22) Date of filing: 20.06.1997
(51) Int. Cl.: H04N 7/00, G06F 13/00, G06F 11/32

(54) **DEVICE USER INTERFACE WITH TOPOLOGY MAP**
BENUTZERSCHNITTSTELLE MIT TOPOLOGIEKARTE
DISPOSITIF D'INTERFACE UTILISATEUR METTANT EN OEUVRE UNE CARTE TOPOLOGIQUE

(30) Priority: 21.06.1996 US 664445; 12.11.1996 US 747452
(43) Date of publication of application: 21.04.1999
(73) Proprietor: Sony Electronics Inc., Park Ridge, New Jersey 07656 (US)
(72) Inventor: IWAMURA, Ryuichi, San Diego, CA 92128 (US); MANO, Yoshizumi, Cupertino, CA 95014 (US); CHILAMAKURI, Chenchu, L., Fremont, CA 94536 (US); PROEHL, Andrew, M., New York, NY 10024 (US)
(74) Representative: Pilch, Adam John Michael
(86) International application number: PCT/US1997/011526
(87) International publication number: WO 1997/049057

(56) References cited:
- US-A- 5 021 976
- US-A- 5 226 120
- US-A- 5 261 044
- US-A- 5 353 399
- US-A- 5 471 399
- US-A- 5 481 674
- US-A- 5 483 631
- US-A- 5 504 863

## Description

### FIELD OF THE INVENTION

The present invention is related to the field of user interfaces and, more particularly, to device control using a topology map displayed as part of such an interface.

### BACKGROUND

The components of a computer system are typically coupled to a common bus for communicating information to one another. Various bus architectures are known in the prior art, and each bus architecture operates according to a communications protocol that defines the manner in which data transfer between components is accomplished.

The Institute of Electrical and Electronic Engineers (IEEE) has promulgated a number of different bus architecture standards including IEEE standards document 1394, entitled Standard for a High Performance Serial Bus (hereinafter "IEEE 1394 Serial Bus Standard"). A typical serial bus having the IEEE 1394 standard architecture is comprised of a multiplicity of nodes that are interconnected via point-to-point links, such as cables, that each connect a single node of the serial bus to another node of the serial bus. Data packets are propagated throughout the serial bus using a number of point-to-point transactions, wherein a node that receives a packet from another node via a first point-to-point link retransmits the received packet via other point-to-point links. A tree network configuration and associated packet handling protocol ensures that each node receives every packet once. The serial bus of the IEEE 1394 Serial Bus Standard may be used as an alternate bus for the parallel backplane of a computer system, as a low cost peripheral bus, or as a bus bridge between architecturally compatible buses.

A communications protocol of the IEEE 1394 Serial Bus Standard specifies two primary types of bus access: asynchronous access and isochronous access. Asynchronous access may be either "fair" or "cycle master". Cycle master access is used by nodes that need the next available opportunity to transfer data. Isochronous access is used by nodes that require guaranteed bandwidth, for example, nodes transmitting video data. The transactions for each type of bus access are comprised of at least one "subaction", wherein a subaction is a complete one-way transfer operation.

The IEEE 1394 serial bus provides plug and play capabilities for applications. Devices can be added and removed from an IEEE 1394 bus while the bus is active. If a device is so added or removed the bus will then automatically reconfigure itself for transmitting data between the existing nodes. However, for a user of an application at a node coupled to the bus, there is no specified method or apparatus for displaying the devices coupled to the IEEE 1394 serial bus. There is also no prescribed method for monitoring the activity of the devices coupled to the IEEE 1394 serial bus. In existing analog or digital networks, a user is not provided with a presentation of information regarding the network, including the type of devices which make up the network, the manner in which the devices are interconnected and the signal flow which occurs between the various devices. To control any of these devices, the user must physically operate each device separately through a control panel on the face of that device. Where the network in question is an analog audio/video system, a signal selector and complicated "spaghetti connections" are unavoidable when a user wishes to dub signals freely between the devices in the network.

In the alternative, it is well known that infrared control devices exist for variety of home entertainment type products such as television. VCR, and sound systems. There are even a number of so-called "universal remote" products available that can control a number of different brands or types of equipment. However, the inventors are not aware of any control device that can control any IEEE 1394 device. Further, there is no device that displays the operation of functions. For example, if a user desired to copy a video sequence from a video optical disk onto a tape in a VCR, the user could separately control the optical disk player to play the sequence and control the VCR to record for a period of time. However, there would be no convenient means for the user to actually confirm that the desired operation was taking place other than to examine the displays on the control panels for the two devices to determine whether each device was separately performing the desired function.

It would, therefore, be desirable to have an apparatus and a method for displaying the topology of a network as part of a user interface so as to provide a means for a user to monitor and control the devices in the network.

In most modern computer systems an operating system provides a graphical interface for the computer user. The user can run applications programs. manipulate files, and perform most other necessary functions through this graphical interface by manipulating images on the computer's display. This manipulation is accomplished by using cursor control keys and other keyboard keys or by using a cursor controlling peripheral device such as a joystick, mouse or trackball.

In such systems, when a program or applications is loaded into the system it is frequently represented on the display by a small graphical image or icon which identifies the program to the user. For example, a word processing program might be represented by a graphical image of a piece of paper having lines of text on it and a writing instrument such as a pencil or pen. This is particularly so if the program has been removed from the screen and is running in the background. On a multitasking computer, several programs or applications can be running at once. each of which would be represented by its own graphical image.

When a new device is coupled to the computer system it is not always represented graphically on the interface. For devices that are controlled by software loaded on and run by the computer system, a graphical image or icon is usually displayed somewhere on the interface or in a pull-down menu. This graphical image or icon for display is usually selected by the user when the software is loaded. In other systems, the image or icon is displayed under the control of the loaded software. For devices that are coupled to and work in conjunction with, but are not controlled by, the computer system, a graphical image or icon may not be displayed on the interface.

It would. therefore, be additionally desirable to have an apparatus and a method for displaying the topology of a network as part of a graphical user interface to provide the means mentioned above for a user to monitor, operate and control the devices in the network.

US-A-5 353 399 discloses a system for managing a plurality of I/O devices, wherein a network map is displayed on a screen, and wherein the operating state of each device is displayed by enhancing the graphical representation.

US-A-5 483 631 shows a network managing system which displays a network topology map on a screen.

### SUMMARY OF THE INVENTION

The invention is as defined in present claims 1,4 17,26 and 31. The dependent claims relate to preferred embodiments thereof.

Accordingly, in one embodiment, a topology map for a digital system is generated and displayed on a display device to indicate the various components which make up the system. The various components are indicated using icons, each of which represent a respective one of the components. A user specifies a source device and a receive device by manipulating the corresponding icons so as to cause a data transfer between the source device and the receive device. The data transfer may include the transfer of video data, audio data, or both. In a preferred embodiment, the digital network corresponds to the IEEE 1394 Serial Bus Standard.

In an embodiment, when a device is added to the serial bus a graphical image representing that device is automatically displayed in a graphical user interface. Similarly, when a device is removed from the serial bus, the graphical image representing that device is grayed out, leaving a shadow of the graphical image until the device is either re-coupled or the system is powered off. Alternatively, the application can be implemented to remove the device from the graphical user interface as soon as that device is removed from the serial bus. In a further alternate embodiment, the device is also grayed out within the graphical user interface when the device is powered off, but remains coupled to the serial bus. Tasks performed by the devices coupled to the serial bus are also controlled and monitored by the user through the graphical user interface of the computer system. In order to control such tasks, a cursor control devices is used to choose options displayed in the graphical user interface.

In a further embodiment, one or more task windows are included in the interface which help the user select the task to be performed. Once selected, controls, commands and data related to the task are displayed within a control display window of the graphical user interface When a task requires data to be sent between devices, the flow of data between the devices over the serial bus network is graphically represented by an animated data stream within the graphical representation of the bus structure. When the data stops flowing between the devices, the animated data stream disappears. When a device is added to the serial bus, an animated stream of data temporarily flows between the graphical image of the new device and the computer system.

There are many advantages provided by the present invention. For example, a user may view a connection map or an exact topology map for the digital system on the display device. Additionally, a user may control data transfer in the digital network by clicking icons or selecting commands from pop-up menus associated with the various components which make up the network. By using the graphical user interface in this way, remote control of the various components of the digital network is provided. Further, a user may understand signal flows within the network and can also view information associated with each of the devices in the network by viewing the topology map displayed on the display device.

These and other features and advantages of the present invention will be apparent to those skilled in the art upon review of the detailed description and accompanying drawings which follow.

### BRIEF DESCRIPTION OF THE DRAWINGS

The present invention is illustrated by way of example and not limitation in the figures of the accompanying drawings in which:
Figure 1 illustrates a digital network according to one embodiment of the present invention:
Figure 2a illustrates an integrated receiver decoder (IRD) configured according to one embodiment of the present invention;
Figure 2b illustrates the main block of the integrated receiver decoder:
Figure 3 is a flow diagram illustrating the process of generating a topology map according to one embodiment of the present invention:
Figure 4 illustrates an exemplary self identification packet format:
Figure 5 illustrates a self identification packet table of the network shown in Figure 1:
Figure 6 illustrates an exemplary connection map of the network illustrated in Figure 1:
Figure 7 illustrates an exemplary topology map of the network illustrated in Figure 1;
Figure 8 is a flow diagram illustrating the process of constructing a topology map:
Figure 9 illustrates a modified packet table of the network shown in Figure 1;
Figure 10 illustrates an exemplary graphic user interface implementation of the present invention:
Figure 11 illustrates a pop-up menu method of an exemplary user interface of the present invention:
Figure 12 illustrates the display of signal flow information between devices in a network on a graphically displayed network map:
Figure 13 illustrates the retrieval of device information from a component of an audio-video system according to one embodiment of the present invention:
Figure 14 illustrates a graphical user interface according to a further embodiment of the present invention:
Figure 15 further illustrates a graphical user interface according to a further embodiment of the present invention after an additional device is added to the serial bus network;
Figure 16 illustrates a printing video frames task displayed within the control display window of the graphical user interface;
Figure 17 illustrates an accessing a music library task displayed within the control display window of the graphical user interface; and
Figure 18 illustrates a computer system on which the graphical user interface of the present invention is implemented.

### DETAILED DESCRIPTION

A method and an apparatus for providing device monitoring and control with a topology map in a network are disclosed. The present invention is applicable to any network which is capable of providing topology information. A digital network corresponding to the IEEE 1394 Serial Bus Standard will be described herein as an exemplary network within which the methods and apparatus of the present invention operate.

In the following detailed description, the terms "topology map" and "connection map" have different meanings. A topology map represents the exact topology of a network and indicates the interconnections between network devices. In contrast, a connection map includes device icons or names, but does not necessarily represent the exact topology of a digital network. Further distinctions between these terms will be apparent from a review of this entire specification. A connection map is sufficient for the purposes of the present invention as a user need not necessarily know the exact topology of a network in order to operate the devices which make up the network. The use of a topology map as described below is, therefore, optional.

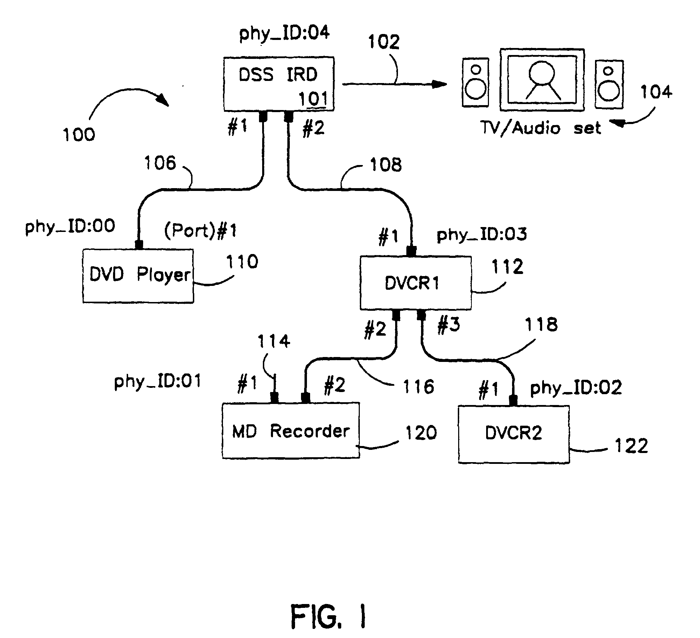

Figure 1 illustrates a digital network 100. Network 100 corresponds to the IEEE 1394 Serial Bus Standard. A digital satellite system integrated receiver decoder ( DSS IRD) 101 is connected to TV (television)/audio set 104 with an analog cable 102. In one embodiment, IRD 101 may obtain topology information and generate a map from the topology information. In an alternate embodiment, TV/audio set 104 may obtain the topology information and generate a map from that information if TV/audio set 104 has IEEE 1394 Serial Bus Standard interface capability and is connected to network 100. IRD 101 is also coupled to various devices in network 100 including digital video disc (DVD) player 110, digital video cassette recorder 1 (DVCR1) 112, mini-disc (MD) recorder 120 and DVCR2 122.

Those skilled in the art will appreciate that each of the devices 101, 110, 112, 120, 122 of the network 100 is associated with a corresponding node of the serial bus. In general, the device to which a node is coupled acts as the "local host" for that node. For example, the DSS IRD 101 is the local host for the DSS IRD node: the DVD player 110 is the local host for the DVD node; DVCR1 112 is the local host for the DVCR 1 node: the MD recorder 120 is the local host for the MD recorder node: and DVCR2 122 is the local host for the DVCR2 node. It is not necessary for every node to have a local host, nor is it necessary that the local host always be powered.

A point-to-point link such as cable 108 is used to connect two nodes to one another. The DSS IRD node is coupled to the DVCR1 node by cable 108 and to the DVD node by cable 106. The DVCR 1 node is coupled to the MD recorder node by cable 116 and to the DVCR2 node by cable 118. The MD recorder node is capable of being coupled to other peripherals (not shown) by cable 114. Each of the cables 106, 108, 114, 116 and 118 may be constructed in accordance with the IEEE 1394 Serial Bus Standard and may include a first differential signal pair for conducting a first signal, a second differential signal pair for conducting a second signal, and a pair of power lines.

Each of the nodes may have identical construction, although some of the nodes can be simplified because of their specific functions. Thus, the nodes can be modified to meet the needs of the particular local host. Each node has one or more ports, the number of which is dependent upon its needs. For example, the DSS IRD node, as illustrated, has two ports, while the DVD player node has only one port.

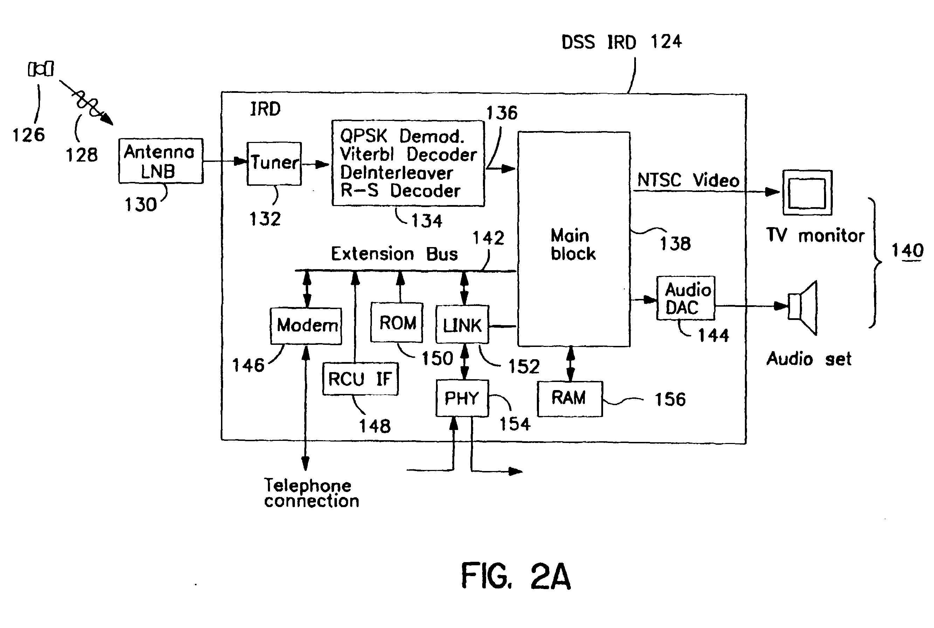

Figure 2a further illustrates the DSS IRD 124. Antenna 130 receives a signal 128 from a satellite 126. Signal 128 is amplified in a low noise block (LNB) and transmitted to tuner 132. Those skilled in the art will appreciate that the signal transmitted to tuner 132 comprises a number of individual channels. In tuner 132, the desired channel from signal 128 is selected for processing and passed to demodulator 134. In demodulator 134, the pre-selected channel is QPSK-demodulated, viterbi-decoded, de-interleaved and Reed-Solomon decoded. The decoded signal 136 is then passed to main block 138 for further processing.

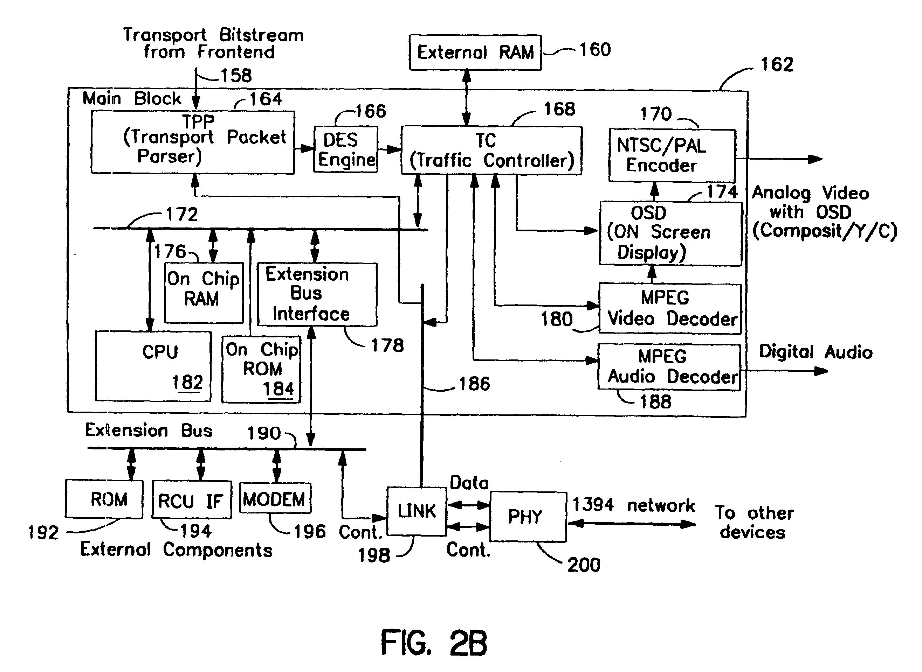

Main block 138 is further illustrated in Figure 2b. As shown, decoded signal 158 is first parsed in Transport Packet Parser (TPP) 164 and then decrypted in DES engine 166. The resulting signal is then stored in an external RAM 160 under the control of traffic controller (TC) 168.

In response to signals from central processing unit (CPU) 182, the stored signal is retrieved from external RAM 160 and transmitted via traffic controller 168 to either MPEG video decoder 180 or MPEG audio decoder 188, as appropriate. The output signal from video decoder 180 is mixed with on-screen display (OSD) data 174 and converted to NTSC or PAL analog signals by NTSC/PAL encoder 170 and transmitted to TV/audio set 104. Digital audio signals are transmitted from the Audio Decoder 188 to Audio DAC 144 and converted to analog signals. The analog signals are then transmitted to TV/audio set 140.

Central processing unit (CPU) 182 controls all of the above processes. CPU 182 communicates with on-chip RAM 176, ROM 184, extension bus 190 and traffic controller 168 through an internal high speed bus 172. CPU 172 also communicates with ROM 192, modem 196 and remote command unit interface (RCU-IF) 194 through extension bus interface 178 and extension bus 190. RCU-IF 194 receives commands from a remote control unit (RCU) (not shown) and transmits them to CPU 182 via extension bus 190. Link layer IC (LINK) 198 and physical layer IC (PHY) 200 communicate with CPU 182 through extension interface bus 178 and extension bus 190. PHY 200 is coupled to LINK 198 via data and control lines and to other nodes of the IEEE 1394 Serial Bus as indicated.

LINK 198 and PHY 200 make up the IEEE 1394 Serial Bus interface for DSS IRD 124. All 1394 commands transmitted by CPU 182 are transferred to LINK 198 through extension bus 190. The 1394 commands are sent via PHY 200 and are ultimately transmitted to a destination node in the network 100. The commands from other devices in network 100 of Figure 1 are received by PHY 200 and transmitted to LINK 198. LINK 198 transfers these commands to CPU 182 through extension bus 190. Audio-video data is transferred between DSS IRD 124 and LINK 198 through 1394 data bus 186. When DSS IRD 124 sends data. TC 168 transfers the data from external RAM 160 or DES engine 166 to LINK 198. When IRD 124 receives data. LINK 198 sends the data to TPP 164 via 1394 data bus 186.

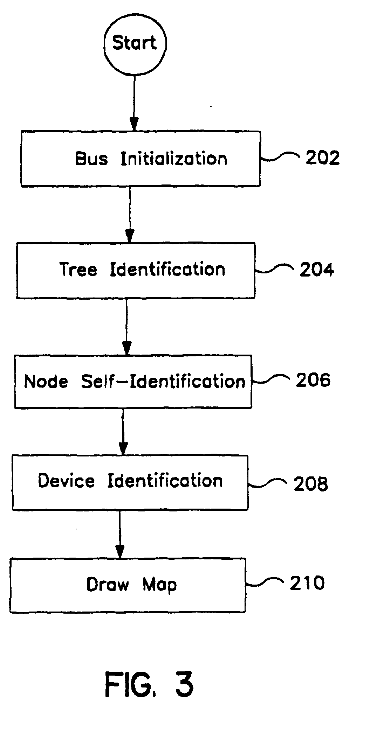

Figure 3 is a flow diagram illustrating the general steps followed by the present invention in constructing a topology map. There are several steps followed in configuring a cable environment, namely, bus initialization, self identification and device identification. In step 202, bus initialization is performed. Upon start up and again whenever a new node joins network 100, a reset signal forces all nodes in network 100 into a special state which clears all topology information and starts the next phase. During the bus initialization phase. PHY 200 internally latches the connection status of each port. PHY 200 will automatically initiate the bus initialization phase if the connection status of any port changes, for example, where an adjacent device is removed or added. In 1394 parlance. nodes with no connected ports are isolated. Nodes with a single connected port are leaves (or children) and nodes with two or more connected ports are branches (or parents). The eventual root node may be either a branch or a leaf.

In step 204, the tree identification phase is performed. During this phase, a tree identification process translates the general network topology into a tree where one node is designated as the root node and all of the physical connections have a direction associated with them pointing towards the root node. Each connected port of each node may be labeled as a parent port (connected to a node closer to the root) or as a child port (connected to a node further from the root). The unconnected ports are labeled "off" and do not participate further in the arbitration process. The tree identification process is well known in the art.

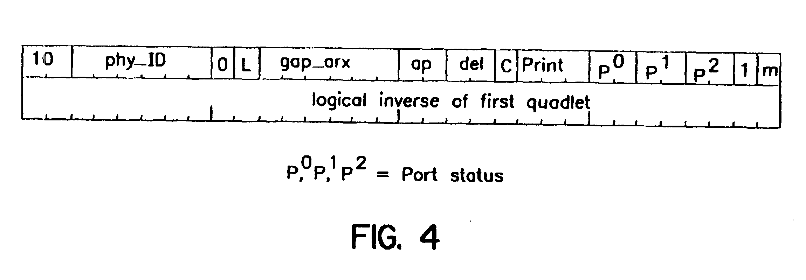

In step 206, to give each node an opportunity to select unique physical identification and identify itself to any management identity attached to the bus, the self identification phase is performed. This phase allows low level power management and the building of the system topology map. This process is also well known in the art. During the self identification process, all nodes identify themselves to all other nodes. An exemplary self identification packet format is illustrated in Figure 4.

During self-identification step 206, each node receives a self identification packet from all the nodes in the network 100. CPU 182 in DSS IRD 124 receives these packets from LINK 198 and stores portions of the information them in a self identification packet table in external RAM 160. Only the physical identification (PHY-ID) and port status bits of each self identification packet are needed to construct a map in accordance with the present invention.

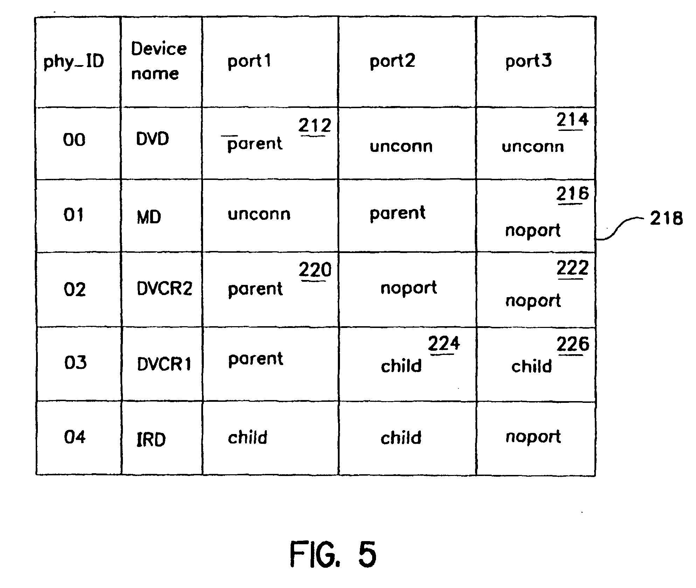

Figure 5 illustrates an exemplary self identification packet table 218 for the network 100 shown in Figure 1. In the table 218, the term "parent" identities a parent node, that is a node which has a port status of 10 (see Figure 4, indicating the port status bits p1, p2, etc.). The term "child" identifies a child node, i.e., a node which has a port status of 11, the term "UNCONN" indicates that the particular port is not connected to any other PHY and the port status is 01, and finally, the term "NOPORT" indicates that the particular port is not present on this particular PHY and the port status is 00. The device name column of table 218 is filled in during step 208.

Returning to Figure 3, step 208, after the self identification process, a device identification process is performed. During this process 208, DSS IRD 124 sends commands to all the nodes and inquires as to their respective device types. Device type information may be stored in and returned from a configuration ROM associated with each node of the serial bus as is known in the art.

According to the responses from the nodes, DSS IRD 124 associates unique device names to the nodes automatically. For example, a DVCR will be named "DVCR". If multiple DVCRs are connected, a suffix will be attached to each of the device names as follows: DVCR1, DVCR2, etc.

As the responses are received, the device name column of table 218 is filled in appropriately as shown in Figure 5. Instead of DSS IRD 124 automatically assigning the device names, a user may also give the devices preferred names.

In step 10 of Figure 3, each device is represented as an icon or a name on the map to be constructed. To construct the map, CPU 182 of DSS IRD 124 executes commands so as to place each icon suitably linked to other icons on the display (i.e., the TV screen or other display device).

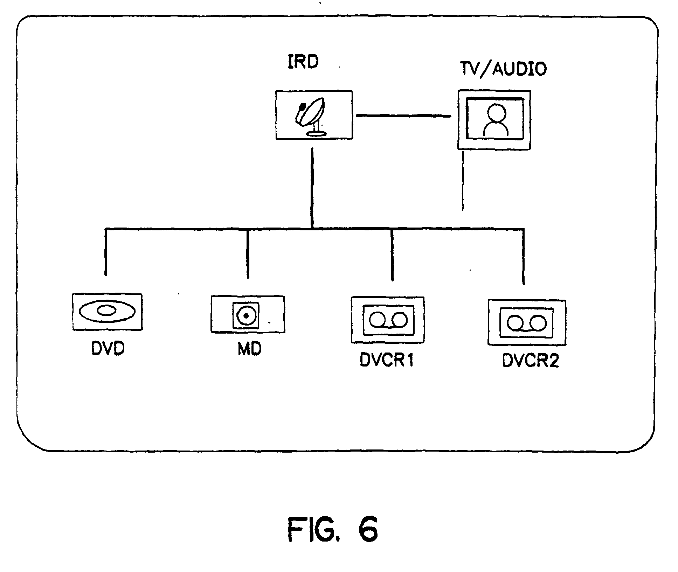

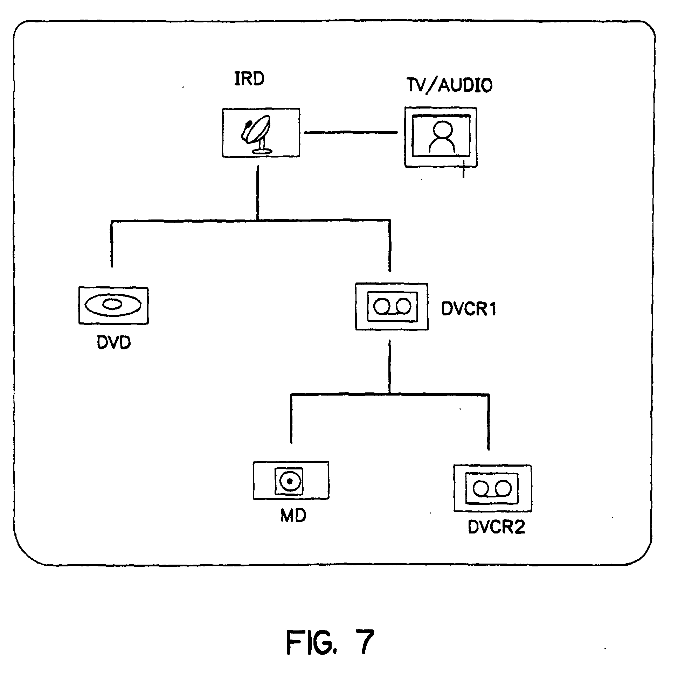

Figure 6 illustrates an exemplary connection map of the network 100 illustrated in Figure 1. In the case of a topology map (in contrast with a connection map). CPU 182 of IRD 124 must construct the exact topology using the physical identifications and port status information stored in table 218. Figure 7 illustrates an exemplary topology map of the network 100 illustrated in Figure 1.

The graphical displays shown in Figures 6 and 7 illustrate the use of icons to represent the various components of network 100. The icons are displayed using programming techniques well known in the art and, as discussed further below, provide a user with a graphical interface by which the user can control the operation of the various devices. It will be appreciated that the graphical illustrations for the various devices could be any of a number of fanciful illustrations, in addition, simple text could be used in place of the graphical illustrations. Where graphical icons are used, the icons may be animated For example, when DVCR1 is operating, the icon representing DVCR1 may depict movement of the video tape which is shown on the graphical icon.

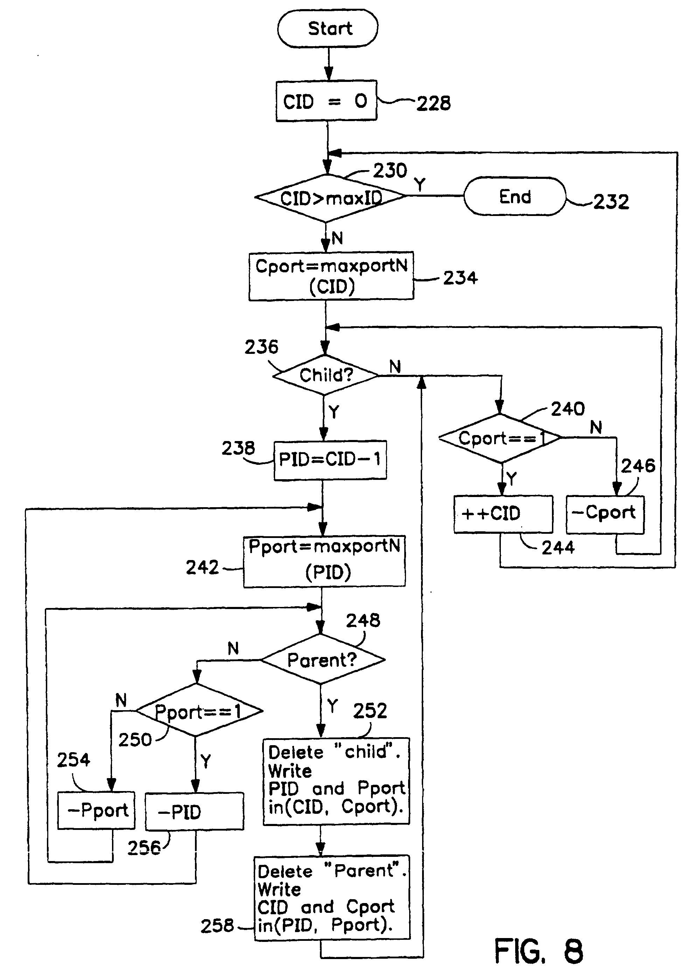

Figure 8 is a flow diagram illustrating the general steps followed by CPU 182 in modifying table 218 of Figure 5 in order to construct a topology map for display. In step 228, child identification counter CID is initialized to 0. At step 230, counter CID is tested to determine whether it has exceeded the maximum physical ID (phy_ID) value for the table 218. In this example, the nodes of network 100 have phy_ID values of 00 (DVD player 110), 01 (MD recorder 120), 02 (DVCR2 122), 03 (DVCR1 112), and 04 (DSS IRD 101). The phy_ID values are derived from the node self-identification packets transmitted during the self-identification process discussed above. If the CID counter exceeds the maximum phy_ID value, all of the cells of table 218 have been tested, as described below, and the process ends at step 232.

At step 234, a second counter, Cport, is set to the maximum port number for table 218. In this example, the maximum port number is 3, however, those skilled in the art will appreciate that the maximum port number may vary depending upon the configuration of network 100 and the nodes comprising same. The two counters. CID, and Cport, are used as place holders to define a cell-by-cell search of table 218.

The search begins at step 236 where a test of the cell defined by CID and Cport is conducted. For the present example, the first cell tested is cell 214. This is because CID is set to 0 initially and Cport is set to 3 initially. CID represents the row of table 218 to be searched and Cport represents the column to be searched. The intersection of the row defined by CID and the column defined by Cport defines the cell to be tested at step 236. The test of step 236 determines whether the current cell is a "child" cell. That is, the test determines whether the port, defined by Cport, of the node, defined by phy_ID or CID, is a child port. For the first cell 214, the test will result in a negative condition and the process moves to step 240.

At step 240, a check is made to determine whether a cell in column 1, e.g., cell 212, is under test. If not, the process moves to step 246 and the counter Cport is decremented. If, however, the current cell under test is in column 1, the counter CID is incremented. In this way, cells of table 218 are tested by moving across a row, defined by CID, from maximum port number to minimum port number. After the cell in column 1 of the row of interest is tested, the process selects the cell in column 3 of the next highest CID row for testing. So, after cell 212 is tested, cell 216 is tested next. This process continues until a child cell is found at step 236. It is apparent that cell 226 will be the first such child cell found. Cell 226 represents port number 3 of DVCR1.

When a child cell of table 218 has been found, the process moves to step 238 and a third counter, PID, is set equal to the current value of CID minus 1. Thus, when cell 226 is found, PID will be set equal to 2 (CID=3-1). Next. at step 242, a fourth counter, Pport, is set equal to the maximum port number (again, for this example the maximum port number is 3). The two counters, PID and Pport, will be used as place holders for a second search of table 218. The goal of this second search will be to find the matching "parent" cell of table 218 for the child cell found in step 236.

The search for the matching parent cell begins at step 248 where the cell defined by the current values of PID and Pport is tested. PID defines the row under test and Pport defines the column under test. So, continuing the above example, after cell 226 is identified as a child cell, PID will be set to 2 and Pport will be set to 3, thus defining cell 222. Cell 222 is tested at step 248 and determined not be a parent cell. Hence, the process moves to step 250.

At step 250, a check is made to determine if the counter Pport is currently equal to 1. If not, the process moves to step 254 and Pport is decremented by 1. If the current value of Pport is equal to 1, the process moves to step 256 and the value of PID is decremented by 1. In this way, the table 218 is searched cell-by-cell moving across each row from right-to-left and moving upwards in the table after the last cell in a row (i.e., the cell in column 1) is tested. It is apparent that a search of this type will result in cell 220 being identified as the first parent cell found.

When a parent cell is found at step 248, the process moves to step 252. At step 252, the child cell found in step 236 is modified. In particular, the term "child" is removed and in its place CPU 182 writes in the corresponding values of PID and Pport. That is, the cell is annotated with the Phy_ID and Port numbers of its corresponding parent in network 100. The process then moves to step 258 and the term "parent" is removed from the cell identified in step 248. In place of "parent". CPU 182 writes in the values of CID and Cport. That is, the cell is annotated with the Phy_ID and Port numbers of its corresponding child in network 100.

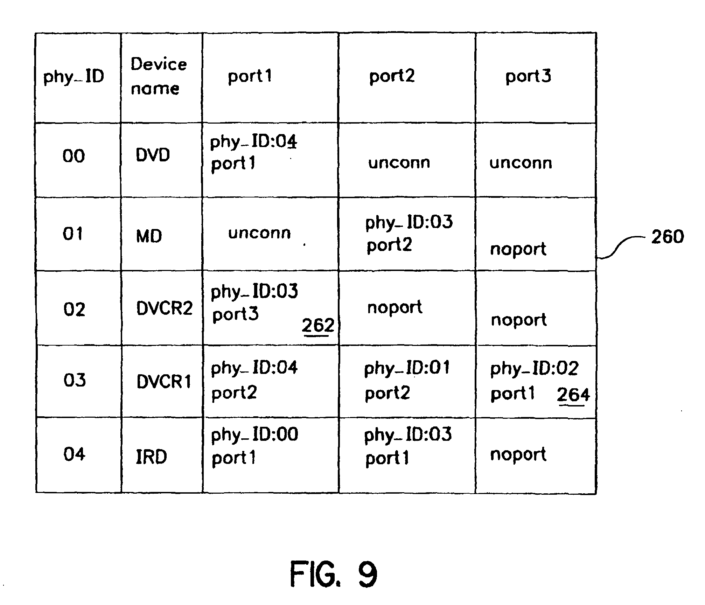

In this way, all of the parent and child cells of table 500 are modified to reflect the proper Phy_ID and port numbers of their respective child and parent nodes. The fully modified table 260 is shown in Figure 9. Note that cell 264 of table 260 corresponds to cell 226 of table 218. Similarly, cell 262 corresponds to cell 220.

Using the information contained in table 260, CPU 182 draws in the appropriate connections between nodes so as to produce a topology map (as opposed to a connection map) on the display. That is, icons representing the various devices of network 100 are drawn in as before. However, rather than merely drawing a connection map, (which shows logical connection of various components) as shown in Figure 6, a topology map, (which shows physical connection of various components) such as that shown in Figure 7, can be drawn because CPU 182 now has the appropriate information in terms of Phy_ID and Port number to allow for a precise reproduction of the network's actual topology. For the network 100 of Figure 1, a connection will be drawn in between port 1 of DVCR2 and port 3 of DVCR 1. Note that cells 264 and 262 contain information which allows for such a connection to be identified. The entire topology map of Figure 7 is drawn in this way with the exception of the known analog connection between DSS IRD 101 and TV/audio set 104.

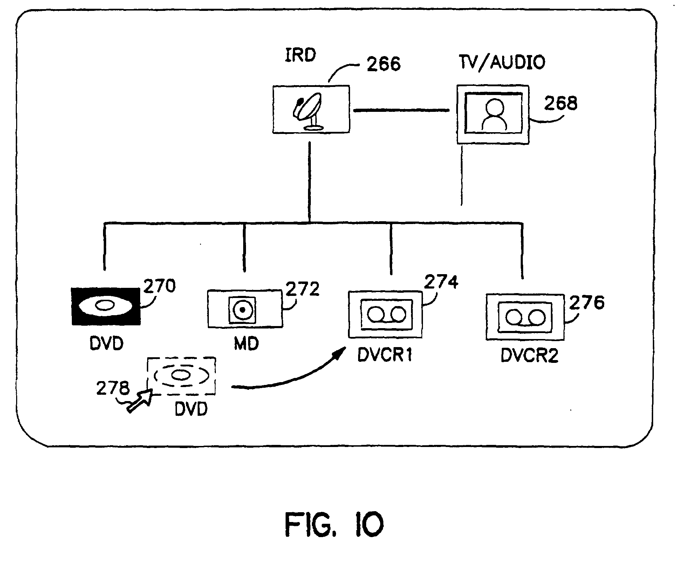

Figures 10 and I 1 illustrate exemplary graphic user interfaces of the present invention. In response to a user command, CPU 182 of DSS IRD 101 constructs a connection map or a topology map as described above and stores it in external RAM 176. Hereafter, it is assumed that a connection map is used although the methods to be described are equally applicable to the use of a topology map. The map data is sent to the OSD block 174 through TC 168 and mixed with the decoded video signal. The mixed signal is converted to NTSC or PAL and sent to TV/audto set 104. The connection map can be superimposed over the television video on the TV/audio set 104.

Figure 10 shows how a user can control the operation of network 100 devices using the connection map. Assume the user wants to record the information played out from DVD player 110 onto a videotape in DVCR1 112 and at the same time play a videotape in DVCR2 122 through DSS IRD 101 on TV/audio set 104. There are two ways to specify each source node and its corresponding receiver node.

For example, in Figure 10, a drag and drop implementation is illustrated. A user selects the icon 280 associated with DVD player 110 and drags it toward a receiver icon using cursor 284. In the example shown, the DVD icon 280, which is highlighted, is dragged and dropped to the DVCR1 icon 282. The select and drag and drop operations are performed using a cursor control device such as an Infrared remote control. In response to these operations, CPU 182 of DSS IRD 101 sends a play command to the DVD piayer 110. The DVD player 110 responds by beginning to play output data into the network. The CPU 182 also sends commands to DVCR1 112 to record the data from the DVD player 110. The commands are generated and transmitted through network 100 in accordance with the IEEE 1394 Serial Bus Standard.

In the same way, in order to play back data from DVCR2 122, a user drags and drops the DVCR2 icon 276 to the DSS IRD icon 266 or the TV icon 268. The DSS IRD 101 and the TV set 104 are connected by an analog cable. In the map, they are regarded as the same node. Note also that a user can specify more than one receiver device. For example, a user can record DVD signals to both DVCR 1 and DVCR2 by dragging and dropping the DVD icon 270 to both DVCR 1 and DVCR2 icons 274 and 276.

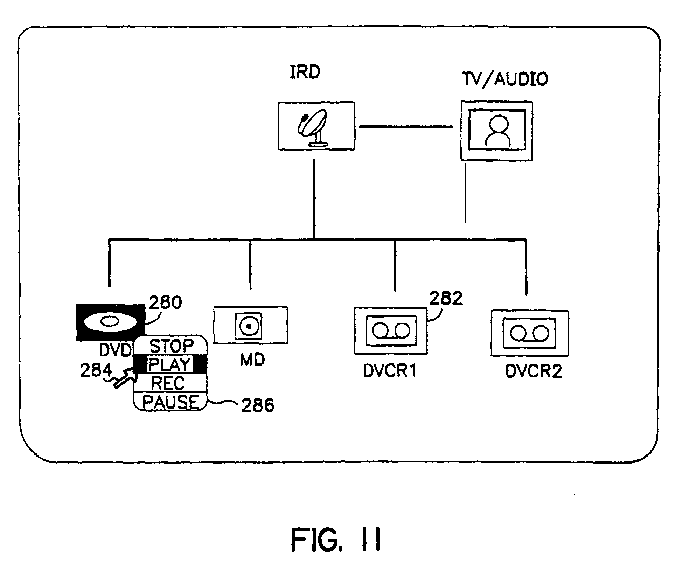

A second method of device control is illustrated in Figure 11 and referred to as the pop-up menu method. When a user selects the DVD player icon 270, a pop-up menu 286 appears. If a PLAY button is selected from the pop-up menu 286 using cursor 284, the DVD player 110 begins to play. In the same way, to set DVCR1 112 to record, a user may select a REC button from a menu associated with DVCR1 icon 274. DVCR2 112 and DSS IRD 101 may be similarly controlled.

The drag and drop method illustrated in Figure 10 is a simpler method to start recording or play back, however, complex commands such as pause, fast-forward, rewind, slow mode, etc. may be better handled by the pop-up menu method illustrated in Figure 11.

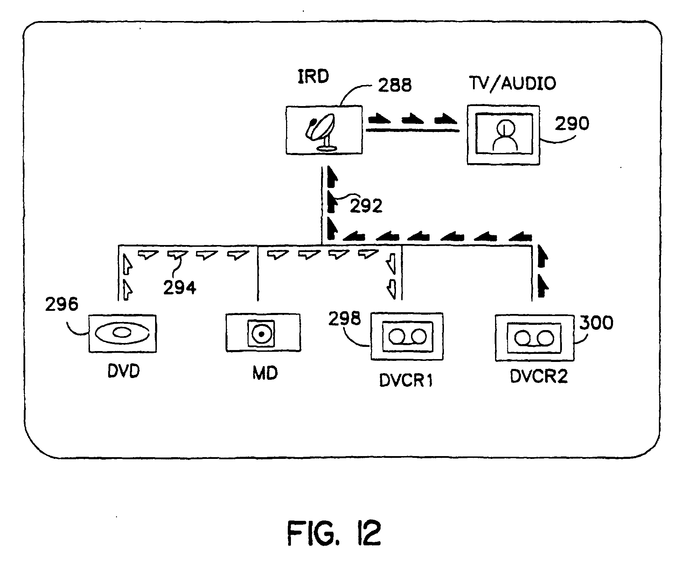

Figure 12 illustrates the display of signal flow information between devices in network 100 illustrated by a connection map. Signal flows are indicated with arrows 294 and 292. For one embodiment, these arrows may be different colors to indicate different information. The arrows can be animated during play and/or search and may flash on and off during a pause. If recording or playback is halted, the arrows disappear. Arrows such as 294 and 292 are implemented using programming techniques well known in the art.

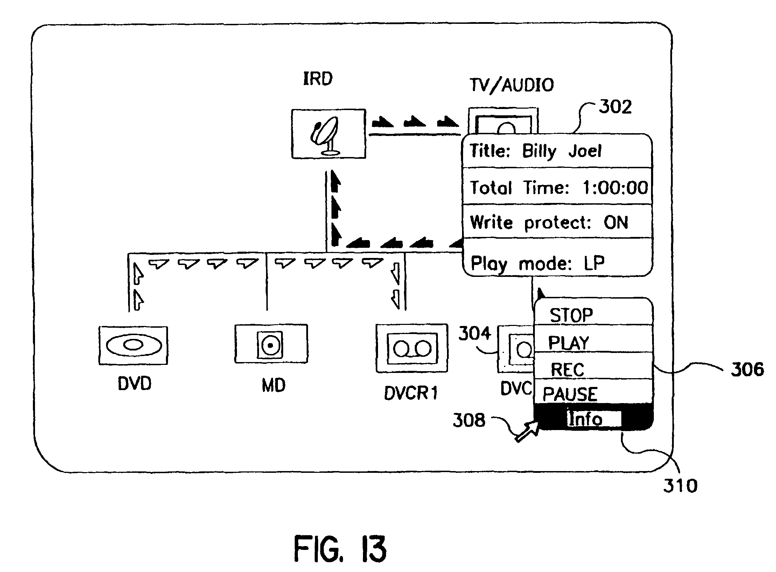

Figure 13 illustrates how device information may be retrieved using the connection map implementation of the present invention. If an INFO button 310 is selected from a pop-up menu 306 associated with DVCR2 icon 304. DSS IRD 101 transmits a command to DVCR2 122 to send information regarding the video tape being played. DVCR2 122 returns the tape information. The information will then appear in a window 302 on the screen as illustrated in Figure 13. The contents of the information window 302 depends on the device selected and its features. Examples of device information include: time (tape/disk remaining time. total playback/recording time, etc.); title (name of the loaded tape or disk); write protection (on or off); and play mode (long play or standard play).

When a device is added to the serial bus network, a graphical image representing that device is dynamically displayed on the graphical user interface. Similarly, when a device is removed from the serial bus, the graphical image representing that device is grayed out in the graphical user interface. In the preferred embodiment, the shadow of the graphical image remains and if the device is again added to the serial bus. the full color of the graphical image is reinstated. When the system is powered off and then powered on, only those devices actually coupled to the serial bus are displayed within the graphical user interface. Accordingly, when a device is removed from serial bus, the graphical image representing that device is grayed out and then removed when the system is powered off and then powered back on, if the device was not re-coupled to the serial bus. Alternatively, the graphical image is removed as soon as the device is removed from the serial bus. In a further alternate embodiment, the graphical image is also grayed out when the device is powered off, but remains coupled to the serial bus, signalling to user of the graphical user interface that the device is currently unavailable.

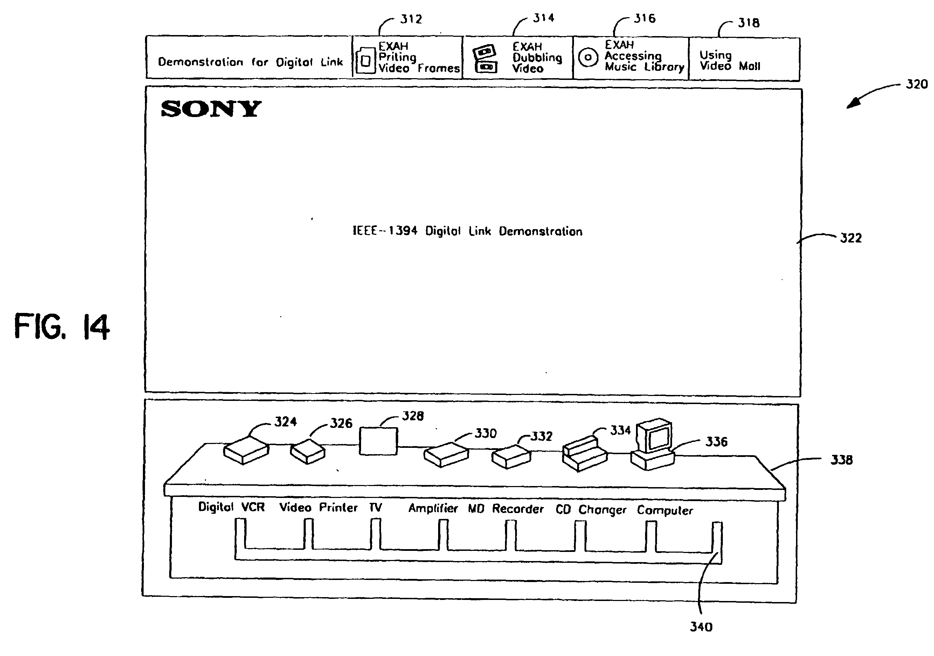

Figure 14 illustrates a third method of device control. Here, a graphical user interface 320 includes a bus display window 338 and a control display window 322. The bus display window 338 displays the devices which are coupled to the serial bus network. A graphical representation of the bus structure 340 is shown connecting each of the represented devices together. This graphical representation may be a topology map or a connection map as discussed above. A computer, on which the graphical user interface is displayed, is coupled to the bus structure. In the bus display window 338 of the graphical user interface 320, a graphical representation of the computer 336 is shown connected to the graphical representation of the bus structure 340. Also shown connected to the bus structure 340 are compact disk (CD) changer 334, a magnetic disk (MD) recorder 332, a stereo amplifier 330, a television 328, a video printer 326 and a digital cassette recorder (VCR) 324. It will be readily understood that this collection of devices on the bus is exemplary only and in no way is intended to limit the scope of this invention or the claims appended hereto.

Communications are directed to the user through the control display window 322. The user also enters control commands and chooses options for a current task through the control display window 322. A user enters the control commands and choose the options using a cursor control device. Tasks available to be performed and controlled through the graphical user interface are displayed in the task windows 312, 314, 316 and 318. A user chooses a task to be performed using the cursor control device. Once chosen, a current task is displayed in the control display window 322. The task windows 312, 314, 316 and 318 preferably display generic tasks based on the general capabilities of the system. Alternatively, the task windows 312, 314, 316 and 318 display specific tasks based on the type of devices coupled to the serial bus network and the capabilities of those devices. As should be apparent to those skilled in the art, the scope of the present invention is not limited to the number of tasks herein described for display within the interface. Depending on the system, any appropriate number of tasks can be displayed within the interface.

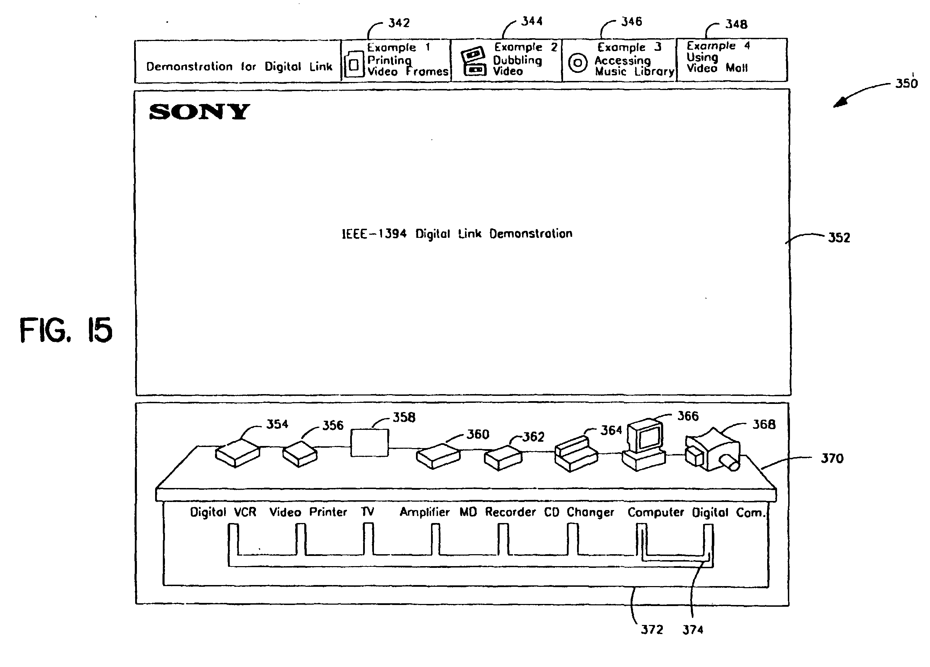

Figure 15 demonstrates the change in the graphical user interface 350 when an additional device is connected to the serial bus network. When the digital camcorder is first coupled to the serial bus network, a communication is sent across the serial bus identifying the type of device that has just been coupled to the serial bus and the address of the device. The host system displaying the graphical user interface 350, receives that communication and determines that a new device has just been coupled to the serial bus, in this example a digital camcorder. The host system then obtains an image for the digital camcorder from an image library. The image library is maintained in the host computer system's memory and contains images of different devices that could be coupled to the serial bus. Alternatively, the computer system will obtain the image of the device from the memory of the device itself. The image of the digital camcorder is then displayed within the bus display window 370 as the graphical representation of the digital camcorder 368.

When the graphical representation of the digital camcorder 368 is first displayed within the bus display window 370, an animated data stream 374 is illustrated within the representation of the bus structure 370, between the graphical representation of the digital camcorder 368 and the graphical representation of the host computer system 366, representing the initializing communication between the two devices. The graphical representation of the digital camcorder 368 will be displayed within the bus display window 370 in full color, as long as the digital camcorder is coupled to the serial bus network.

If the digital camcorder is removed from the serial bus network, the graphical representation of the digital camcorder 368 is grayed out, leaving a shadow or outline of the digital camcorder. If the digital camcorder is then re-coupled to the serial bus network before the system is powered off, the graphical representation of the digital camcorder 368 is reinstated in full color. If the system is powered off before the digital camcorder is re-coupled to the serial bus network. then the graphical representation of the digital camcorder 368 is removed, when the system is again powered on. In an alternate embodiment, the graphical representation of the digital camcorder 368 is removed as soon as the digital camcorder is removed from the serial bus network. In a further alternate embodiment, the graphical representation of the digital camcorder 368 is grayed out if the digital camcorder is powered off and is still coupled to the serial bus network. This demonstrates to the user that the digital camcorder is coupled to the serial bus network, but is currently unavailable.

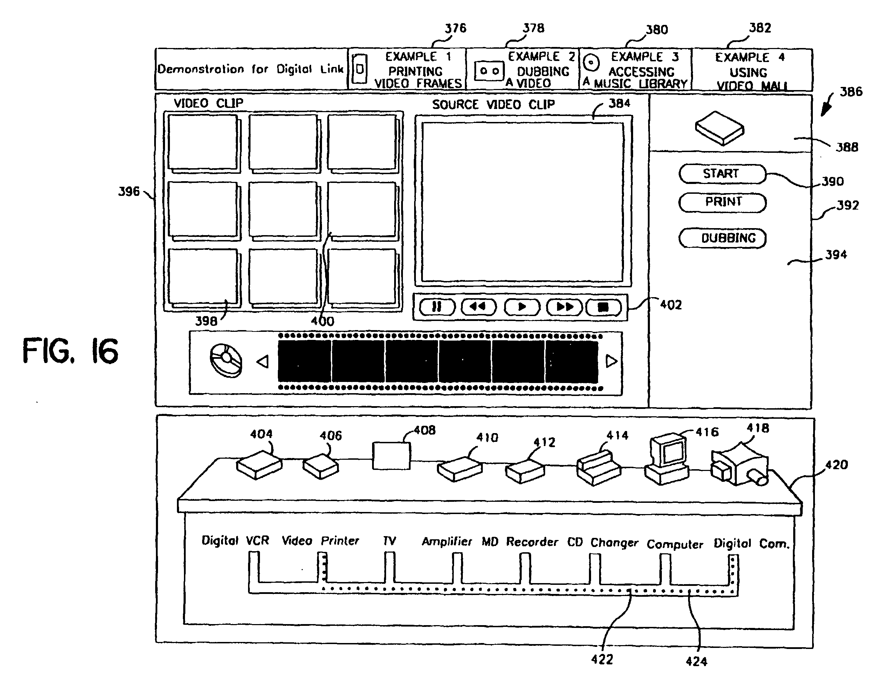

Figure 16 illustrates how a currently selected task, chosen by the user, is displayed within the control display window 392 in the graphical user interface 386. The chosen current task illustrated in this figure is the task of printing video frames from the digital camcorder on the video printer. A user chooses this task by selecting the printing video frames task, within the task window 376, using the cursor control device. When a particular task is chosen the button corresponding to the task is highlighted. When a current task is displayed within the control, display window 392, the control display window 392 includes a device subwindow 388, a commands subwindow 394 and a task control subwindow 396. The graphical representation of the device to be used to complete the task is displayed in the device subwindow 388. In the printing video frames task displayed in Figure 3, the graphical representation displayed within the device subwindow 388 is the graphical representation of the video printer.

The commands to be chosen by the user are displayed within the commands subwindow 394. In the printing video frames task displayed in Figure 16, the commands available to the user are start, print and dubbing. A user selects one of the commands in the commands subwindow 394 using the cursor control device. Not all of the displayed commands are available for selection at all times. When available for selection, a command is highlighted, as is the start command 390.

The task control subwindow 396 displays the options available to the user for completing the task. In the printing video task displayed in Figure 16, video frames from which the user can select for printing are displayed in a frame window 398 within the task control subwidow 396. The video frames to be displayed are read from a video source, in this case the digital camcorder. The displayed video frames occur at a predetermined interval on the tape within the digital camcorder. Preferably, in the printing video frames display in this figure, the video frames are displayed in one second intervals within the frame task window 398. The user can scroll through theses video frames using the control selection options 402, displayed within the task control subwindow 396. The user selects one of the control selections 402 using the cursor control device. The video frames will then be displayed at one second intervals at a rate and in an order based on the control selection option chosen by the user, e.g., play, fast forward, rewind, stop and pause.

The user selects one or more of the video frames displayed within the frame window 398 for printing using the cursor control device. In the example illustrated in Figure 16, the user has selected the video frame 398. Once selected, the video frame 398 is first displayed within the selected frame window 384 and will be printed once the user enters the print command from the commands subwindow 394.

When a video frame is being printed and data is being sent from the digital camcorder to the video printer, an animated stream of data 424 is illustrated within the representation of the bus system 422. The animated stream of data 424 is shown flowing from the graphical representation of the digital camcorder 418 to the graphical representation of the video printer 406. This animated stream of data 424 allows a user to monitor the operation of the devices coupled to the serial bus network.

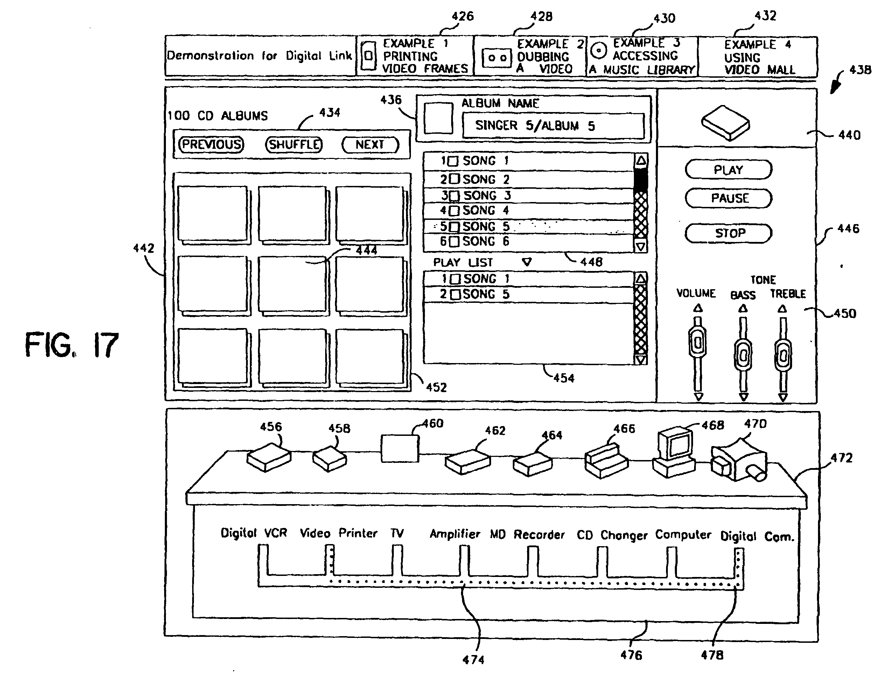

Figure 17 displays a currently selected task of accessing a music library within the control display window 446 in the graphical user interface 438. The task of accessing a music library allows a user to play a CD stored within the CD changer through the stereo amplifier. A user chooses this task by selecting the accessing a music library task, within the task window 430, using the cursor control device. The graphical representation of the CD changer is displayed within the device subwindow 440. The commands subwindow 450 includes play, pause and stop commands as well as slidable controls for volume, bass and treble, which are selected and controlled by the user using the cursor control devices. In the accessing a music library task, displayed in Figure 17, available music CDs are displayed in a CD window 452. A user scans through the available music CDs using the control selection options 434 and the cursor control device.

A user selects one of the CDs displayed in the CD window 452 using the cursor control device. Once selected the title of the CD is displayed in an Album Name subwindow 436. In the example illustrated in Figure 17, the selected CD is the CD 444. The titles of the available songs on the selected CD are displayed in the Song List subwindow 448. From the Song List subwindow 448, a user can select songs to be played using the cursor control device. The selected songs to be played are listed in the selected order in the Play List subwindow 454.

When a song from a CD is being played and data is being sent from the CD chanter to the amplifier, an animated stream of data 474 is illustrated within the representation of the bus system 478. The animated stream of data 474 is shown flowing between the graphical representation of the CD changer 466 and the graphical representation of the stereo amplifier 462.

In the example illustrated in Figure 17, a task of dubbing a video has previously been initiated by a user. This task involves taking the selected parts of the tape in the digital camcorder and copying onto a tape in the digital VCR while simultaneously playing the video on the television. This task is being completed at the same time the selected CD is being played. Accordingly, there are two simultaneous animated data streams flowing within the representation of the serial bus network 478. The animated data stream 474 is shown flowing between the graphical representation of the CD changer 466 and the graphical representation of the stereo amplifier 462 for the playing the CD task. An animated data stream 476 is shown flowing between the graphical representation of the digital camcorder 470, the graphical representation of the digital VCR 456 and the graphical representation of the television 460 for the dubbing video task. Once the task is complete and the data stops flowing between these devices, the animated data stream 476, of the graphical user interface will disappear.

The graphical user interface of the present invention allows a user to control and monitor the operation of devices preferably coupled together by an IEEE 1394 serial bus network. It should be apparent that the graphical user interface of the present invention can also be used to control and monitor devices coupled together in other types of networks. The bus display window 472 within the graphical user interface displays the devices coupled to the serial bus network. When a device is added to the serial bus network a graphical representation of that device is displayed within the bus display window 472. When a device is removed from the serial bus display window 472, leaving a shadow of the graphical representation until the device is either re-coupled or the system is powered off. A graphical representation of the serial bus coupled to the devices is also illustrated in the bus display window 472. When data flows between devices on the serial bus network, an animated stream of data flows between the graphical representation of those devices, within the representation of the serial bus network. Accordingly, a user can monitor the activity and data communications on the serial bus network through the graphical user interface of the present invention.

The control display window 446 is used to communicate with the user and to allow the user to make selections and control the operation of the devices coupled to the serial bus network. The task windows 426, 428, 430 and 432 allow a user to select a task for display in the control display window 446.

The graphical user interface is preferably displayed on a computer system. However, the graphical user interface is alternatively displayed on a television, monitor or other system which coupled to the serial bus network and which includes a display device. In order to control and initiate tasks to be performed by the devices, a cursor control device is used by the user to choose options displayed on the graphical user interface. The cursor control device can be a mouse, keypad, trackball, remote control or other device, depending on the configuration of the host system. Further, the cursor control device can be wired or wireless using radio, infrared or any other appropriate technology.

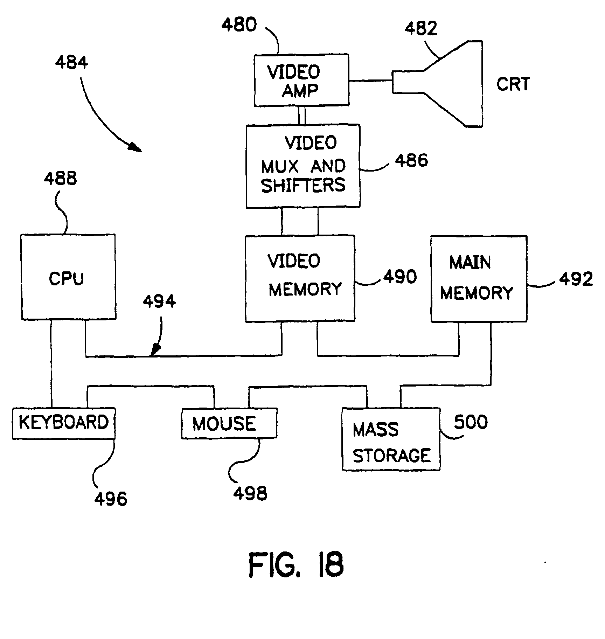

Figure 18 shows an exemplary computer system 484 on which the graphical under interface of the present invention is implemented. In Figure 18, the computer system 484 includes a central processor unit (CPU) 488, a main memory 492, a video memory 490, a keyboard 496 for user input, supplemented by a conventional mouse 498 for manipulating graphic images as a cursor control device and a mass storage device 500, all coupled together by a conventional bidirectional system bus 497. The mass storage device 500 may include both fixed and removable media using any one or more of magnetic, optical or magneto-optical storage technology or any other available mass storage technology. The system bus 497 contains an address bus for addressing any portion of the memory 492 and 490, the system bus 497 also includes a data bus for transferring data between and among the CPU 488, the main memory 492, the video memory 490, and the mass storage device 500.

Coupled to a port of the video memory 490 is a video multiplex and shifter circuit 486, to which in turn a video amplifier 480 is coupled. The video amplifier 480 drives a monitor or display 482 on which the graphical user interface of the present invention is displayed. The video multiplex and shifter circuitry 486 and the video amplifier 480 convert pixel data stored in the video memory 490 to raster signals suitable for use by the monitor 482.

Thus a method and apparatus for device control with a topology map on a network have been described. Although features and examples of the present invention have been described with reference to specific exemplary embodiments thereof, those skilled in the art will appreciate that certain modifications may be possible without departing from the broader spirit and scope of the invention which should be limited only by the claims which follow.

## Claims

1. A method of controlling a digital system which comprises a plurality of nodes interconnected by a plurality of point to point links, each of the nodes having an associated local host, the method comprising:
generating a network topology map for the plurality of nodes based on port status information regarding the nodes, the network topology map comprising node identification information, the network topology map being stored in a memory;
associating with the node identification information, corresponding local host identification information in a data structure in the memory;
generating a connection map from the network topology map and the local host identification, the connection map indicating the plurality of local hosts using graphical representations of the local hosts and further indicating an interconnection of each of the plurality of local hosts;
displaying the connection map in conjunction with video information being processed in the digital system by mixing signals representing the video information and the connection map, the video information being suitable for display on a television; and
controlling the operation of a first of the plurality of local hosts in response to manipulation of a corresponding one of the graphical representations.

2. A method as claimed in claim 1, wherein the connection map includes graphical representations of physical connection paths between the plurality of local hosts.

3. A method as claimed in claim 1, wherein the connection map includes graphical representations of logical connection paths between the plurality of local hosts.

4. A method as claimed in claim 1, claim 2 or claim 3, wherein the step of controlling comprises the steps of:
receiving a selection of the corresponding graphical representation of the first local host; and
receiving a command to drag and drop the corresponding graphical representation of the first local host over a corresponding graphical representation of a second local host, wherein the drag and drop command indicates a digital transmission between the first local host and the second local host across the digital system.

5. A method as claimed in claim 1, claim 2 or claim 3, wherein the step of controlling comprises the steps of:
receiving a selection of the corresponding graphical representation of the first local host;
displaying a pop-up menu associated with the first local host, the pop-up menu comprising a plurality of commands for the first local host;
receiving a selection of one of the commands on the pop-up menu; and
causing the first local host to operate in accordance with the selected command.

6. A method as claimed in claim 5, further comprising the step of displaying signal flow information, the signal flow information graphically representing a transfer of information within the digital system, the transfer corresponding to the operation of the first local host.

7. A method as claimed in claim 6, wherein the transfer of information is represented by a plurality of arrows, the arrows indicating the direction of information transfer with the digital system.

8. A method as claimed in claim 7, wherein the plurality of arrows are animated.

9. A method as claimed in claim 1, claim 2 or claim 3, wherein the step of controlling comprises the steps of:
receiving a selection of the corresponding graphical representation of the first local host; and
displaying, in response to receiving the selection, a device information window, the device information window comprising device information concerning the first local host.

10. A method as claimed in any one of claims 1 to 9, wherein the digital system is an audio/visual system having a plurality of audio/video components as the local hosts.

11. A method as claimed in claim 1, wherein the plurality of point to point links forms a bus structure, the method further comprising the steps of:
displaying a bus structure representation coupled to each of the plurality of graphical representations of the local hosts in the connection map; and
displaying an animated data stream between the graphical representations of active local hosts to represent data communications between the active local hosts over the bus structure.

12. A method as claimed in claim 11, wherein the bus structure is an IEEE 1394 bus structure.

13. A method as claimed in any one of claims 1 to 12, wherein the connection map is displayed on the display of a computer system, the computer system comprising the display, a memory and an input device.

14. A method as claimed in claim 13, wherein the input device is a mouse.

15. A method as claimed in any one of claims 1 to 14, further comprising the step of displaying one or more task windows, each for displaying potential tasks for selection, wherein the potential tasks wher selected are performed using one or more local hosts.

16. A method as claimed in claim 15, further comprising the step of displaying a control display window for displaying information and commands relating to a selected task.

17. A local host for a digital network including a plurality of nodes interconnected by a plurality of point-to-point links, each of the nodes having an associated local host, the local host being operable to control the network and comprising:
a central processing unit (CPU) configured to generate a connection map for the digital network in response to a first signal, the connection map being based on port status information regarding the nodes, and comprising graphical representation of the plurality of local hosts and further indicating interconnection of each of the plurality of local hosts;
a memory coupled to the CPU, the memory being configured to store the connection map as a data structure; and
means for combining video signals representing video data being processed in the digital network with topology signals corresponding to the connection map received from the memory to produce a mixed signal in which the connection map is displayed in conjunction with the video data, the video data being suitable for display on a television.

18. A local host as claimed in claim 17, wherein the means for combining comprises a video decoder coupled to receive the video signals and an on-screen display mixer coupled to receive the video signals from the video decoder, and to receive the topology signals from the memory.

19. A local host as claimed in claim 17 or claim 18, comprising an interface unit coupled to the CPU, the interface unit configured to generate the first signal in response to a user command.

20. A local host as claimed in claim 19, wherein the interface unit comprises an infrared remote control receiver.

21. A local host as claimed in any one of claims 17 to 20, further comprising:
means for displaying an animated data stream between representations of active local hosts on the connection map to represent data communications between the active local hosts.

22. A local host as claimed in claim 21, wherein the point to point links form a bus structure, and further comprising a bus structure node circuit for detecting presence and types of the nodes coupled to the bus structure and for communicating over the bus structure.

23. A local host as claimed in claim 22, wherein the bus structure is an IEEE 1394 serial bus.

24. A local host as claimed in any one of claims 17 to 23, wherein the CPU is further operable to generate one or more task windows, each for displaying potential tasks for selection, wherein the potential tasks when selected are performed using one or more of the local hosts.

25. A local host as claimed in claim 24, wherein the CPU is further operable to display a control display window for displaying information and commands relating to a selected task.

26. A graphical user interface for monitoring and controlling operation of a plurality of nodes interconnected by a plurality of point to point links forming a bus structure, each of the nodes having an associated local host, the graphical user interface comprising:
a connection map displayed in conjunction with video information being processed in the digital system, the connection map comprising device images representing the plurality of local hosts and a bus structure representation coupled to each of the device images representing the bus structure between the plurality of local hosts; and
an animated data stream within the bus structure representation between active local hosts representing data flowing on the bus structure between the active local hosts.

27. A graphical user interface as claimed in claim 26, wherein the graphical user interface is displayed on a computer system having a display, a memory and an input device.

28. A graphical user interface as claimed in claim 27, wherein the input device is a mouse.

29. A graphical user interface as claimed in any one of claims 26 to 28, further comprising one or more task windows each for displaying potential tasks for selection, wherein the potential tasks when selected are performed using one or more of the local hosts.

30. A graphical user interface as claimed in any one of claims 26 to 29, further comprising a control display window for displaying information and commands relating to a selected task and the devices associated with that task.

31. A system comprising:
a bus structure comprising point to point links between a plurality of nodes, and configured for providing communications between the nodes;
a plurality of local hosts, each associated with a node for communicating across the bus structure; and
a graphical user interface for monitoring and controlling operation of the plurality of local hosts, including a connection map displayed in conjunction with video information being processed in the system for display on a television, the graphical user interface comprising:
a plurality of device images each representing a corresponding one of the plurality of local hosts;
a bus structure representation illustratively coupled to each of the plurality of device images representing the bus structure; and
an animated data stream illustrated within the bus structure representation between active device images representing data flowing on the bus structure between active local hosts.

32. A system as claimed in claim 31, wherein the graphical user interface is displayed on a computer system having a display, a memory and an input device.

33. A system as claimed in claim 31 or claim 32, wherein the graphical user interface further comprises one or more task windows, each for displaying potential tasks for selection, wherein the potential tasks when selected are completed by one or more of the devices.

34. A system as claimed in claim 31, claim 32 or claim 33, wherein the bus structure is an IEEE 1394 serial bus.

## Patentansprüche

1. Verfahren zum Steuern eines Digitalsystems, welches mehrere Knotenpunkte aufweist, die durch mehrere Punkt-zu-Punkt-Verknüpfungen miteinander verbunden sind, wobei jeder Knotenpunkt einen damit verknüpften lokalen Host hat, wobei das Verfahren aufweist:
Erzeugen einer Netzwerk-Topologiekarte für die mehreren Knotenpunkte auf der Basis der Portstatusinformation bezüglich der Knotenpunkte, wobei die Netzwerktopologiekarte Knotenpunkt-Identifikationsinformation umfasst, wobei die Netzwerktopologiekarte in einem Speicher gespeichert ist;
Verknüpfen der Knotenpunkt-Identifikationsinformation, welche der lokalen Host-Identifikationsinformation in einer Datenstruktur im Speicher entspricht;
Erzeugen einer Verbindungskarte von der Netzwerktopologiekarte und der lokalen Host-Identifikation, wobei die Verbindungskarte die mehreren lokalen Hosts zeigt, welche grafische Darstellungen der lokalen Hosts verwenden, und weiter eine Zwischenverbindung jeder der mehreren lokalen Hosts zeigt;
Anzeigen der Verbindungskarte in Verbindung mit Videoinformation, die im Digitalsystem verarbeitet wird, durch Mischen von Signalen, welche die Videoinformation und die Verbindungskarte darstellen, wobei die Videoinformation zur Anzeige auf einem Fernsehgerät geeignet ist; und
Steuern des Betriebs eines ersten von den mehreren lokalen Hosts als Antwort auf eine Handhabung einer entsprechenden der grafischen Darstellungen.

2. Verfahren nach Anspruch 1, wobei die Verbindungskarte grafische Darstellungen von realen Verbindungspfaden zwischen den mehreren lokalen Hosts aufweist.

3. Verfahren nach Anspruch 1, wobei die Verbindungskarte grafische Darstellungen von logischen Verbindungspfaden zwischen den mehreren lokalen Hosts aufweist.

4. Verfahren nach Anspruch 1, 2 oder 3, wobei der Steuerungsschritt folgende Schritte aufweist:
Empfangen einer Auswahl der entsprechenden grafischen Darstellung des ersten lokalen Hosts; und
Empfangen eines Befehls, um die entsprechende grafische Darstellung des ersten lokalen Hosts über eine entsprechende grafische Darstellung des zweiten lokalen Hosts zu ziehen, wobei der Zieh-Befehl eine digitale Übertragung zwischen dem ersten lokalen Host und dem zweiten lokalen Host über das Digitalsystem zeigt.

5. Verfahren nach Anspruch 1, 2 oder 3, wobei der Steuerungsschritt folgende Schritte aufweist:
Empfangen einer Auswahl der entsprechenden grafischen Darstellung des ersten lokalen Hosts;
Anzeigen eines Herunterzieh-Menüs in Verbindung mit dem ersten lokalen Host, wobei das Herunterzieh-Menü mehrere Befehle für den ersten lokalen Host aufweist;
Empfangen einer Auswahl von einem der Befehle auf dem Herunterzieh-Menü; und
Veranlassen, dass der erste lokale Host gemäß dem ausgewählten Befehl arbeitet.

6. Verfahren nach Anspruch 5, welches außerdem den Schritt aufweist, eine Signalflussinformation anzuzeigen, wobei die Signalflussinformation eine Informationsübertragung innerhalb des Digitalsystems grafisch zeigt, wobei die Übertragung dem Betrieb des ersten lokalen Hosts entspricht.

7. Verfahren nach Anspruch 6, wobei die Übertragung von Information durch mehrere Pfeile dargestellt ist, wobei die Pfeile die Informationsübertragungsrichtung mit dem Digitalsystem zeigen.

8. Verfahren nach Anspruch 7, wobei die mehreren Pfeile animiert sind.

9. Verfahren nach Anspruch 1, 2 oder 3, wobei der Steuerungsschritt folgende Schritte aufweist:
Empfangen einer Auswahl der entsprechenden Grafikdarstellung des ersten lokalen Hosts; und
Anzeigen - als Antwort auf den Empfang der Auswahl - eines Vorrichtungsinformationsfensters, wobei das Vorrichtungsinformationsfenster Vorrichtungsinformation aufweist, welche den ersten lokalen Host betrifft.

10. Verfahren nach einem der Ansprüche 1 bis 9, wobei das Digitalsystem ein Audiosystem/visuelles System ist, welches mehrere Audio-/Videokomponenten als lokale Hosts aufweist.

11. Verfahren nach Anspruch 1, wobei die mehreren Punkt-zu-Punkt-Verknüpfungen eine Busstruktur bilden, wobei das Verfahren weiter folgende Schritte aufweist:
Anzeigen einer Busstrukturdarstellung, welche mit jeder der grafischen Darstellungen der lokalen Hosts in der Verbindungskarte gekoppelt ist; und
Anzeigen eines animierten Datenstroms zwischen den grafischen Darstellungen von aktiven lokalen Hosts, um Datenkommunikationen zwischen den aktiven lokalen Hosts über die Busstruktur darzustellen.

12. Verfahren nach Anspruch 11, wobei die Busstruktur eine IEEE-1394-Bustruktur ist.

13. Verfahren nach einem der Ansprüche 1 bis 12, wobei die Verbindungskarte auf der Anzeigeeinrichtung eines Computersystems angezeigt wird, wobei das Computersystem die Anzeige, eine Speicher und eine Eingabeeinrichtung aufweist.

14. Verfahren nach Anspruch 13, wobei die Eingabeeinrichtung eine Maus ist.

15. Verfahren nach einem der Ansprüche 1 bis 14, welches weiter den Schritt aufweist, eine oder mehrere Aufgabenfenster anzuzeigen, wobei jedes dafür ist, um potentielle Aufgaben zur Auswahl anzuzeigen, wobei die. potentiellen Aufgaben, wenn sie ausgewählt sind, unter Verwendung eines oder mehrerer lokaler Hosts durchgeführt werden.

16. Verfahren nach Anspruch 15, welches außerdem den Schritt aufweist, ein Steuerungsanzeigefenster anzuzeigen, um Information und Befehle bezüglich einer ausgewählten Aufgabe anzuzeigen.

17. Lokaler Host für ein digitales Netzwerk mit mehreren Knotenpunkten, die über mehrere Punkt-zu-Punkt-Verknüpfungen miteinander verbunden sind, wobei jeder der Knotenpunkte einen damit verknüpften lokalen Host hat, wobei der lokale Host betreibbar ist, das Netzwerk zu steuern, und aufweist:
eine Zentralverarbeitungseinheit (CPU), die konfiguriert ist, eine Verbindungskarte für das digitale Netzwerk als Antwort auf ein erstes Signal zu erzeugen, wobei die Verbindungskarte auf der Portstatusinformation bezüglich der Knotenpunkte basiert, und grafische Information der mehreren lokalen Hosts umfasst und weiter die Zwischenverbindung jeder der mehreren lokalen Hosts angezeigt;
einen Speicher, der mit der CPU gekoppelt ist, wobei der Speicher konfiguriert ist, die Verbindungskarte als eine Datenstruktur zu speichern; und
eine Einrichtung zum Kombinieren von Videosignalen, die Videodaten darstellen, welche im digitalen Netzwerk mit Topologiesignalen entsprechend der Verbindungskarte verarbeitet werden, welche vom Speicher empfangen wird, um ein Mischsignal zu erzeugen, bei dem die Verbindungskarte in Verbindung mit den Videodaten angezeigt wird, wobei die Videodaten für eine Anzeige auf einem Fernsehgerät geeignet sind.

18. Lokaler Host nach Anspruch 17, wobei die Einrichtung zum Kombinieren einen Videodecoder, der gekoppelt ist, um die Videosignale zu empfangen, und einen On-Screen-Anzeigemischer aufweist, der gekoppelt ist, um die Videosignale vom Videodecoder zu empfangen und um die Topologiesignale vom Speicher zu empfangen.

19. Lokaler Host nach Anspruch 17 oder 18, der eine Schnittstelleneinheit aufweist, welche mit der CPU gekoppelt ist, wobei die Schnittstelleneinheit konfiguriert ist, das erste Signal als Antwort auf einen Benutzerbefehl zu erzeugen.

20. Lokaler Host nach Anspruch 19, wobei die Schnittstelleneinheit einen Infrarot-Fernsteuerungsempfänger aufweist.

21. Lokaler Host nach einem der Ansprüche 17 bis 20, der außerdem aufweist:
eine Einrichtung zum Anzeigen eines animierten Datenstroms zwischen Repräsentationen von aktiven lokalen Hosts auf der Verbindungskarte, um Datenkommunikationen zwischen den aktiven lokalen Hosts darzustellen.

22. Lokaler Host nach Anspruch 21, wobei die Punkt-zu-Punkt-Verknüpfungen eine Busstruktur bilden, und außerdem eine Busstruktur-Knotenpunktschaltung aufweist, um das Vorhandensein und die Arten von Knotenpunkten zu ermitteln, welche mit der Busstruktur gekoppelt sind, und zur Kommunikation über die Busstruktur.

23. Lokaler Host nach Anspruch 22, wobei die Busstruktur ein IEEE-1394-Seriell-Bus ist.

24. Lokaler Host nach einem der Ansprüche 17 bis 23, wobei die CPU außerdem betreibbar ist, ein oder mehrere Aufgabenfenster zu erzeugen, wobei jedes zur Anzeige von potentiellen Aufgaben zur Auswahl dient, wobei die potentiellen Aufgaben, wenn diese ausgewählt sind, unter Verwendung eines oder mehrerer der lokalen Hosts durchgeführt werden.

25. Lokaler Host nach Anspruch 24, wobei die CPU weiter betreibbar ist, um ein Steuerungsanzeigefenster anzuzeigen, um Information und Befehle bezüglich einer ausgewählten Aufgabe anzuzeigen.

26. Grafische Benutzerschnittstelle zum Überwachen und zum Steuern des Betriebs von mehreren Knotenpunkten, die miteinander über mehrere Punkt-zu-Punkt-Verknüpfungen verbunden sind, die eine Busstruktur bilden, wobei jeder der Knotenpunkte einen damit verknüpften lokalen Host hat, wobei die grafische Benutzerschnittstelle aufweist:
eine Verbindungskarte, welche in Verbindung mit Videoinformation angezeigt wird, die in dem Digitalsystem verarbeitet wird, wobei die Verbindungskarte Vorrichtungsbilder, welche die mehreren lokalen Hosts zeigen, und eine Busstrukturdarstellung aufweist, welche mit jedem der Vorrichtungsbilder gekoppelt ist, welche die Busstruktur zwischen den mehreren lokalen Hosts darstellt; und
einen animierten Datenstrom innerhalb der Busstrukturdarstellung zwischen aktiven lokalen Hosts, welcher Daten zeigt, welche auf der Busstruktur zwischen den aktiven lokalen Hosts fließen.

27. Grafische Benutzerschnittstelle nach Anspruch 26, wobei die grafische Benutzerschnittstelle auf einem Computersystem angezeigt wird, welches eine Anzeigeeinrichtung, einen Speicher und eine Eingabeeinrichtung hat.

28. Grafische Benutzerschnittstelle nach Anspruch 27, wobei die Eingabeeinrichtung eine Maus ist.

29. Grafische Benutzerschnittstelle nach einem der Ansprüche 26 bis 28, die außerdem ein oder mehrere Aufgabenfenster aufweist, wobei jedes zur Anzeige von potentiellen Aufgaben zur Auswahl dient, wobei die potentiellen Aufgaben, wenn ausgewählt, unter Verwendung von einem oder mehreren der lokalen Hosts durchgeführt werden.

30. Grafische Benutzerschnittstelle nach einem der Ansprüche 26 bis 29, welche außerdem ein Steuerungsanzeigefenster aufweist, um Information und Befehle anzuzeigen, die sich auf eine ausgewählte Ausgabe beziehen, und die Einrichtungen, welche mit dieser Aufgabe in Verbindung stehen.

31. System, welches aufweist:
eine Busstruktur, welche Punkt-zu-Punkt-Verknüpfungen zwischen mehreren Knotenpunkten aufweist und konfiguriert ist, Kommunikationen zwischen den Knotenpunkten bereitzustellen;
mehrere lokale Hosts, wobei jeder mit einem Knotenpunkt zur Kommunikation über die Busstruktur verknüpft ist; und
eine grafische Benutzerschnittstelle, um den Betrieb der mehreren lokalen Hosts zu überwachen und zu steuern, einschließlich einer Verbindungskarte, welche in Verbindung mit Videoinformation angezeigt wird, welche im System zur Anzeige auf einem Fernsehgerät verarbeitet wird, wobei die grafische Benutzerschnittstelle aufweist:
mehrere Vorrichtungsbilder, die jeweils einen entsprechenden der mehreren lokalen Hosts zeigen;
eine Busstrukturdarstellung, die beispielhaft mit jedem der mehreren Vorrichtungsbilder, welche die Busstruktur darstellen, gekoppelt ist; und
einen animierten Datenstrom, der innerhalb der Busstrukturdarstellung zwischen aktiven Vorrichtungsbildern gezeigt wird, welche Daten zeigen, welche auf der Busstruktur zwischen aktiven lokalen Hosts fließen.

32. System nach Anspruch 31, wobei die grafische Benutzerschnittstelle auf einem Computersystem angezeigt wird, das eine Anzeigeeinrichtung, einen Speicher und eine Eingabeeinrichtung hat.

33. System nach Anspruch 31 oder 32, wobei die grafische Benutzerschnittstelle außerdem ein oder mehrere Aufgabenfenster aufweist, wobei jedes zur Anzeige von potentiellen Aufgaben zur Auswahl dient, wobei die potentiellen Aufgaben, wenn ausgewählt, durch eine oder mehrere der Vorrichtungen beendet werden.

34. System nach Anspruch 31, 32 oder 33, wobei die Busstruktur ein IEEE-1394-Seriell-Bus ist.

## Revendications

1. Procédé de commande d'un système numérique qui comprend une pluralité de noeuds qui sont interconnectés par une pluralité de liaisons point à point, chacun des noeuds comportant un hôte local associé, le procédé comprenant :
la génération d'une carte de topologie de réseau pour la pluralité de noeuds sur la base d'une information d'état de port concernant les noeuds, la carte de topologie de réseau comprenant une information d'identification de noeud, la carte de topologie de réseau étant stockée dans une mémoire ;
l'association, à l'information d'identification de noeud, d'une information d'identification d'hôte local correspondante dans une structure de données dans la mémoire ;
la génération d'une carte de connexions à partir de la carte de topologie de réseau et de l'identification d'hôte local, la carte de connexions indiquant la pluralité d'hôtes locaux en utilisant des représentations graphiques des hôtes locaux et indiquant en outre une interconnexion de chacun de la pluralité des hôtes locaux ;
l'affichage de la carte de connexions en conjonction avec une information vidéo qui .est traitée dans le système numérique en mélangeant des signaux représentant l'information vidéo et la carte de connexions, l'information vidéo convenant pour un affichage sur une télévision ; et
la commande du fonctionnement d'un premier de la pluralité d'hôtes locaux en réponse à une manipulation de l'une correspondante des représentations graphiques.

2. Procédé selon la revendication 1, dans lequel la carte de connexions inclut des représentations graphiques de voies de connexion physique entre la pluralité d'hôtes locaux.

3. Procédé selon la revendication 1, dans lequel la carte de connexions inclut des représentations graphiques de voies de connexion logique entre la pluralité d'hôtes locaux.

4. Procédé selon la revendication 1, 2 ou 3, dans lequel l'étape de commande comprend les étapes de :
réception d'une sélection de la représentation graphique correspondante du premier hôte local ; et
réception d'une commande pour traîner et lâcher la représentation graphique correspondante du premier hôte local sur une représentation graphique correspondante d'un second hôte local où la commande de traînée et de lâcher indique une transmission numérique entre le premier hôte local et le second hôte local sur le système numérique.

5. Procédé selon la revendication 1, 2 ou 3, dans lequel l'étape de commande comprend les étapes de :
réception d'une sélection de la représentation graphique correspondante du premier hôte local ;
affichage d'un menu déroulant associé au premier hôte local, le menu déroulant comprenant une pluralité de commandes pour le premier hôte local ;
réception d'une sélection de l'une des commandes sur le menu déroulant ; et
action consistant à faire en sorte que le premier hôte local fonctionne conformément à la commande sélectionnée.

6. Procédé selon la revendication 5, comprenant en outre l'étape d'affichage d'une information de flux de signal, l'information de flux de signal représentant de façon graphique un transfert d'information à l'intérieur du système numérique, le transfert correspondant au fonctionnement du premier hôte local.

7. Procédé selon la revendication 6, dans lequel le transfert d'information est représenté par une pluralité de flèches, les flèches indiquant la direction de transfert d'information avec le système numérique.

8. Procédé selon la revendication 7, dans lequel les flèches de la pluralité de flèches sont animées.

9. Procédé selon la revendication 1, 2 ou 3, dans lequel l'étape de commande comprend les étapes de :
réception d'une sélection de la représentation graphique correspondante du premier hôte local ; et
affichage, en réponse à la réception de la sélection, d'une fenêtre d'information de dispositif, la fenêtre d'information de dispositif comprenant une information de dispositif concernant le premier hôte local.

10. Procédé selon l'une quelconque des revendications 1 à 9, dans lequel le système numérique est un système audio/visuel qui comporte une pluralité de composants audio/vidéo en tant qu'hôtes locaux.

11. Procédé selon la revendication 1, dans lequel les liaisons de la pluralité de liaisons point à point forment une structure de bus, le procédé comprenant en outre les étapes de :
affichage d'une représentation de structure de bus couplée à chacune de la pluralité des représentations graphiques des hôtes locaux dans la carte de connexions ; et
affichage d'un train de données animées entre les représentations graphiques d'hôtes locaux actifs pour représenter des communications de données entre les hôtes locaux actifs sur la structure de bus.

12. Procédé selon la revendication 11, dans lequel la structure de bus est une structure de bus IEEE 1394.

13. Procédé selon l'une quelconque des revendications 1 à 12, dans lequel la carte de connexions est affichée sur l'affichage d'un système d'ordinateur, le système d'ordinateur comprenant l'affichage, une mémoire et un dispositif d'entrée.

14. Procédé selon la revendication 13, dans lequel le dispositif d'entrée est une souris.

15. Procédé selon l'une quelconque des revendications 1 à 14, comprenant en outre l'étape d'affichage d'une ou de plusieurs fenêtres de tâche, chacune pour afficher des tâches potentielles pour une sélection, dans lequel les tâches potentielles, lorsqu'elles sont sélectionnées, sont réalisées en utilisant un ou plusieurs hôtes locaux.

16. Procédé selon la revendication 15, comprenant en outre l'étape d'affichage d'une fenêtre d'affichage de commande pour afficher une information et des commandes se rapportant à une tâche sélectionnée.

17. Hôte local pour un réseau numérique incluant une pluralité de noeuds interconnectés par une pluralité de liaisons point à point, chacun des noeuds comportant un hôte local associé, l'hôte local pouvant fonctionner pour commander le réseau et comprenant :
une unité centrale de traitement (CPU) qui est configurée pour générer une carte de connexions pour le réseau numérique en réponse à un premier signal, la carte de connexions étant basée sur une information d'état de port concernant les noeuds, et comprenant une représentation graphique de la pluralité d'hôtes locaux et indiquant en outre une interconnexion de chacun de la pluralité d'hôtes locaux ;
une mémoire couplée à la CPU, la mémoire étant configurée pour stocker la carte de connexions en tant que structure de données ; et
un moyen pour combiner des signaux vidéo représentant des données vidéo qui sont en train d'être traitées dans le réseau numérique avec des signaux de topologie correspondant à la carte de connexions reçue depuis la mémoire afin de produire un signal mixte ou mélangé où la carte de connexions est affichée en conjonction avec les données vidéo, les données vidéo convenant pour un affichage sur une télévision.

18. Hôte local selon la revendication 17, dans lequel le moyen de combinaison comprend un décodeur vidéo couplé pour recevoir des signaux vidéo et un mélangeur d'affichage sur écran couplé pour recevoir les signaux vidéo en provenance du décodeur vidéo et pour recevoir les signaux de topologie en provenance de la mémoire.

19. Hôte local selon la revendication 17 ou 18, comprenant une unité d'interface couplée à la CPU, l'unité d'interface étant configurée pour générer le premier signal en réponse à une commande d'utilisateur.

20. Hôte local selon la revendication 19, dans lequel l'unité d'interface comprend un récepteur de commande à distance ou de télécommande par infrarouges.

21. Hôte local selon l'une quelconque des revendications 17 à 20, comprenant en outre un moyen pour afficher un train de données animées entre des représentations d'hôtes locaux actifs sur la carte de connexions afin de représenter des communications de données entre les hôtes locaux actifs.

22. Hôte local selon la revendication 21, dans lequel les liaisons point à point forment une structure de bus, et comprenant en outre un circuit de noeud de structure de bus pour détecter une présence et des types des noeuds couplés à la structure de bus et pour communiquer sur la structure de bus.

23. Hôte local selon la revendication 22, dans lequel la structure de bus est un bus série IEEE 1394.

24. Hôte local selon l'une quelconque des revendications 17 à 23, dans lequel la CPU peut en outre fonctionner pour générer une ou plusieurs fenêtres de tâche, chacune pour afficher des tâches potentielles pour une sélection, dans lequel les tâches potentielles, lorsqu'elles sont sélectionnées, sont réalisées en utilisant un ou plusieurs des hôtes locaux.

25. Hôte local selon la revendication 24, dans lequel la CPU peut en outre fonctionner pour afficher une fenêtre d'affichage de commande pour afficher une information et des commandes se rapportant à une tâche sélectionnée.

26. Interface d'utilisateur graphique pour surveiller et commander un fonctionnement d'une pluralité de noeuds qui sont interconnectés au moyen d'une pluralité de liaisons point à point formant une structure de bus, chacun des noeuds comportant un hôte local associé, l'interface d'utilisateur graphique comprenant :
une carte de connexions qui est affichée en conjonction avec une information vidéo qui est en train d'être traitée dans le système numérique, la carte de connexion comprenant des images de dispositif représentant la pluralité d'hôtes locaux et une représentation de structure de bus couplée à chacune des images de dispositif représentant la structure de bus entre la pluralité d'hôtes locaux ; et
un train de données animées à l'intérieur de la représentation de structure de bus entre des hôtes locaux actifs représentant des données qui circulent sur la structure de bus entre les hôtes locaux actifs.

27. Interface d'utilisateur graphique selon la revendication 26, dans laquelle l'interface d'utilisateur graphique est affichée sur un système d'ordinateur comportant un affichage, une mémoire et un dispositif d'entrée.

28. Interface d'utilisateur graphique selon la revendication 27, dans laquelle le dispositif d'entrée est une souris.

29. Interface d'utilisateur graphique selon l'une quelconque des revendications 26 à 28, comprenant en outre une ou plusieurs fenêtres de tâche, chacune pour afficher des tâches potentielles pour une sélection, dans laquelle les tâches potentielles, lorsqu'elles sont sélectionnées, sont réalisées en utilisant un ou plusieurs des hôtes locaux.

30. Interface d'utilisateur graphique selon l'une quelconque des revendications 26 à 29, comprenant en outre une fenêtre d'affichage de commande pour afficher une information et des commandes se rapportant à une tâche sélectionnée et les dispositifs associés à cette tâche.

31. Système comprenant :
une structure de bus qui comprend des liaisons point à point entre une pluralité de noeuds, et configurée pour assurer des communications entre les noeuds ;
une pluralité d'hôtes locaux, chacun étant associé à un noeud pour communiquer sur la structure de bus ; et
une interface d'utilisateur graphique pour surveiller et commander un fonctionnement de la pluralité d'hôtes locaux, incluant une carte de connexions qui est affichée en conjonction avec une information vidéo qui est en train d'être traitée dans le système pour un affichage sur une télévision, l'interface d'utilisateur graphique comprenant :
une pluralité d'images de dispositif dont chacune représente l'un correspondant de la pluralité d'hôtes locaux ;
une représentation de structure de bus qui est couplée à chacune de la pluralité d'images de dispositif représentant la structure de bus ; et
un train de données animées qui est représenté à l'intérieur de la représentation de structure de bus entre des images de dispositif actif représentant les données qui circulent sur la structure de bus entre des hôtes locaux actifs.

32. Système selon la revendication 31, dans lequel l'interface d'utilisateur graphique est affichée sur un système d'ordinateur qui comporte un affichage, une mémoire et un dispositif d'entrée.

33. Système selon la revendication 31 ou 32, dans lequel l'interface d'utilisateur graphique comprend en outre une ou plusieurs fenêtres de tâche, chacune pour afficher des tâches potentielles pour une sélection, dans lequel les tâches potentielles, lorsqu'elles sont sélectionnées, sont menées à terme par un ou plusieurs des dispositifs.

34. Système selon la revendication 31, 32 ou 33, dans lequel la structure de bus est un bus série IEEE 1394.
